# EUROPEAN PATENT SPECIFICATION

(11) **EP 2 873 478 B1**
(45) Date of publication and mention of the grant of the patent: **15.06.2016**
(21) Application number: 13382465.6
(22) Date of filing: 18.11.2013
(51) Int. Cl.: B23B 47/28, B25B 5/10

(54) **Drill hole locating tool**
Bohrlochauffindungswerkzeug
Outil de localisation de perçage

(43) Date of publication of application: 20.05.2015
(73) Proprietor: Airbus Operations S.L., 28906 Getafe (ES)
(72) Inventor: Toledo Garcia, Miguel Ángel, E-28906 Getafe - Madrid (ES)
(74) Representative: ABG Patentes, S.L.

(56) References cited:
- ES-A1- 2 326 583
- GB-A- 2 295 338
- US-A- 2 348 116
- US-A- 2 430 025
- US-A- 2 886 080
- US-A- 4 060 333
- US-A- 4 601 618
- US-A- 5 409 329

## Description

### Object of the Invention

The present invention relates to a tool for copying a hard-to-access drill hole to another workpiece requiring an identical or similar drill hole.

More specifically, it relates to a drill hole locating tool according to the preamble of claim 1 and to a method for using such a drill hole locating tool. Such a drill hole locating tool and method are known from US 4 601 618 A1.

### Background of the Invention

In manufacturing operations, it is essential to make drill holes for joining workpieces together mainly by screwing or riveting.

It is not always easy to make drill holes since sometimes there is a need to copy a drill hole located in a hard-to-access area, or there are difficulties in precisely calculating the drilling position if a blind hole, i.e., not a though hole, is to be copied.

Some tools for locating drill holes such as those described in document ES 200800575 are known.

### Description of the Invention

The present invention relates to a drill hole locating tool according to claim 1 and a method for using a drill hole locating tool according to claim 8. Preferred embodiments of the invention are defined in the dependent claims.

In a first inventive aspect, the invention relates to a drill hole locating tool comprising:
- a first plate comprising at least one guide protrusion and at least one positioning protrusion,
- a second plate comprising a guide hole for each guide protrusion and a positioning hole for each positioning protrusion, the at least one guide hole and the at least one positioning hole being arranged such that the orthogonal projections of the centers of the guide holes on the first plate in the position of use substantially coincide with the centers of the corresponding guide protrusions and the orthogonal projection of the center of the positioning hole on the first plate in the position of use substantially coincides with the center of the positioning protrusion,

- a separating protrusion arranged in the first plate or in the second plate,
- a separating through hole made in the plate not having the separating protrusion,
- at least one elastic element with two ends, one end being located in contact with one of the first and second plates and the other end being located in contact with the other plate, such that the elastic force generated by the elastic element tends to separate both first and second plates, and
- a fixing element suitable for being fixed to the separating protrusion and abutting against the plate having the separating hole, balancing the elastic separating force exerted by the elastic element on the second plate.

The at least one guide hole and the at least one positioning hole are arranged such that the orthogonal projections of the centers of the guide holes on the first plate in the position of use substantially coincide with the centers of the corresponding guide protrusions and the orthogonal projection of the center of the positioning hole on the first plate in the position of use substantially coincides with the center of the positioning protrusion. In other words, when both the first and second plates are in the position of use, the orthogonal projection of each guide hole on the first plate coincide with the outline of each guide protrusion, and the orthogonal projection of the positioning hole on the first plate coincides with the outline of the positioning protrusion.

In a particular embodiment, the elastic element surrounds the at least one separating protrusion. In a particular embodiment, the elastic element is a spring.

In a particular embodiment, the at least one separating protrusion is threaded.

In a particular embodiment, the fixing element is a wing nut suitable for being fixed to the separating element by means of screwing.

In a particular embodiment, the first plate and the second plate are metal plates.

In a particular embodiment, the length of at least one guide protrusion is greater than 10 mm.

In a second inventive aspect, the invention provides a method for using the drill hole locating tool according to the first inventive aspect for copying an initial drill hole from a first workpiece to a second workpiece, the method being characterized in that it comprises the steps of:
a) providing a first workpiece comprising an initial drill hole, and a second workpiece,
b) introducing the positioning protrusion of the drill hole locating tool in the initial drill hole of the first workpiece,
c) placing the second workpiece on the first workpiece,
d) tightening the second plate against the second workpiece by means of the separating protrusion and the fixing element, such that the first workpiece and the second workpiece are comprised between the first plate and the second plate, and the second workpiece is accessible through the positioning hole of the second plate,
e) making a drill hole in the second workpiece through the positioning hole.

In a particular embodiment, the method is carried out with a fixing element which is a wing nut suitable for being fixed to the separating element by means of screwing, and in step
d) the second plate is tightened against the second workpiece by means of screwing said fixing element on the separating protrusion.

Generally, the guide protrusion, the at least one positioning protrusion and the separating protrusion are each arranged on their corresponding plate, such that they can be part of the plate on which they are arranged or they can be fixed thereto, these workpieces being independent workpieces, either being fitted in the plate or threaded, screwed or glued thereon or being fixed by means of any other type of fixing.

Advantageously, the presence of the elastic element in combination with the fixing element enables adjusting the gap between the first and second plates without the need to manually open them, with the error that it may generate, rather with a simple movement of shifting the fixing element, which is converted in a particular case into a screwing movement either for tightening or for loosening the element. Therefore, greater precision in adjusting the gap between both plates and a uniform separation are achieved, keeping both plates parallel during the process of separating them or bringing them closer together.

### Description of the Drawings

The foregoing and other features and advantages of the invention will be better understood from the following detailed description of a preferred embodiment provided only by way of illustrative and non-limiting example in reference to the attached drawings.
Figure 1 shows a perspective view of a drill hole locating tool according to the invention.
Figure 2 shows a perspective view of several steps of a method for using a drill hole locating tool according to the invention.
Figure 3 shows a perspective view of several steps of a method for using a drill hole locating tool according to the invention.

### Detailed Description of the Invention

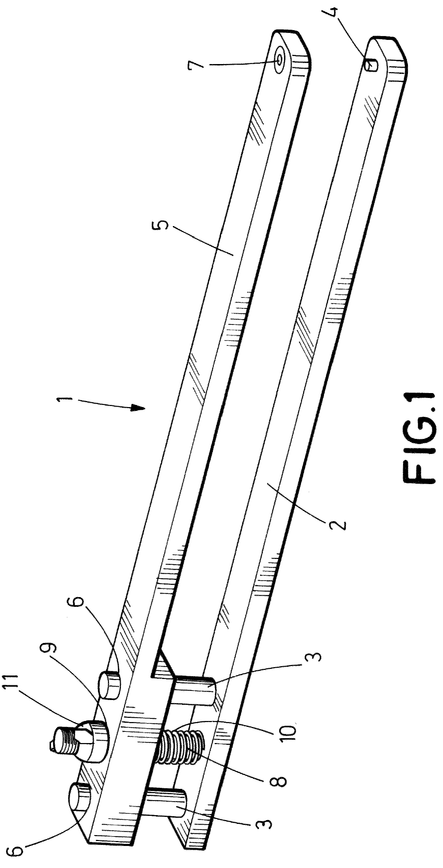

Figure 1 shows a perspective view of a drill hole locating tool (1) according to the invention.

This drawing shows the parts forming this drill hole locating tool (1):
- a first plate (2) comprising two guide protrusions (3) and a positioning protrusion (4),
- a second plate (5) comprising two guide holes (6) and a positioning hole (7),
- a separating protrusion (8) arranged in the first plate (2),
- a separating through hole (9) made in the second plate (5),
- an elastic element (10) with two ends, one end being located in contact with the first plate (2) and the other end being located in contact with the second plate (5), and
- a fixing element (11) suitable for being fixed to the separating protrusion (8).

The guide holes (6) and the positioning hole (7) are arranged such that they allow simultaneously housing each guide protrusion (3) in a corresponding guide hole (6) and the positioning protrusion (4) in the positioning hole (7). This result is obtained when both first plate (2) and second plate (5) are joined together.

The elastic element (10) is located between both first plate (2) and second plate (5), such that in a situation of using the tool, said elastic element (10) is compressed. Therefore, the elastic expansion force generated by the elastic element (10) tends to separate both first plate (2) and second plate (5).

The fixing element (11) is fixed in the separating protrusion (8). This separating protrusion (8) is located in the first plate (2) and prolongs until it traverses the second plate (5) through the separating hole (9), which is a through hole traversing the second plate (5). Since the elastic element (10) exerts an expansion force that tends to separate the first plate (2) and second plate (5), the fixing element (11) abuts against the second plate (5) to keep the second plate (5) balanced, said fixing element (11) being fixed on the face of the second plate (5) opposite the face on which the elastic element exerts its expansion force, balancing said force. Therefore, the second plate (5) is balanced because the expansion force exerted thereon by the compressed elastic element (10) is compensated for with the reaction force exerted by the fixing element (11) since it is fixed in the separating protrusion (8). In this specific example, the fixing element is a wing nut which is fixed by means of screwing on the separating protrusion (8).

In this particular embodiment, the elastic element (10) is a conventional coil spring surrounding the separating protrusion (8). The expansion force exerted on the second plate (5) is thus compensated for by the other face of the second plate (5) with the fixing element (11), the moment exerted by this torque on this second plate (5) being negligible.

In a particular embodiment, the first plate (2) and the second plate (5) are metal plates.

In a particular embodiment, the length of the guide protrusion (3) is greater than 10 mm.

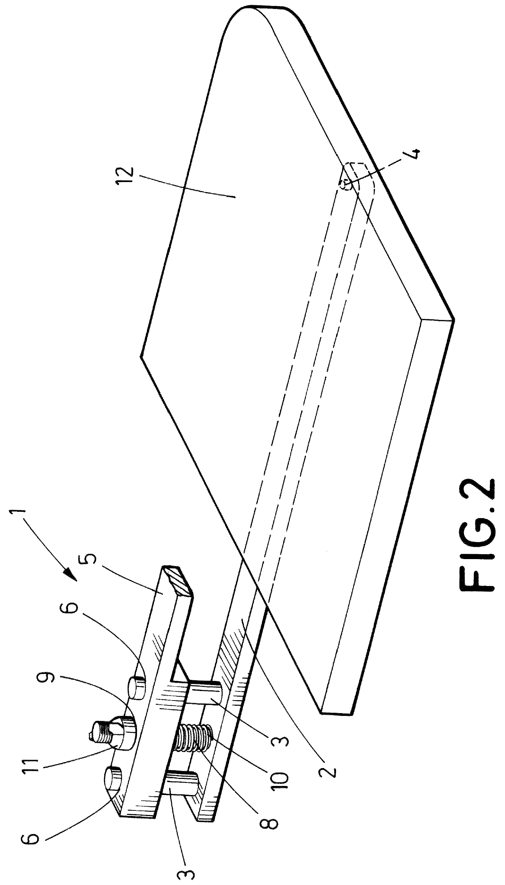

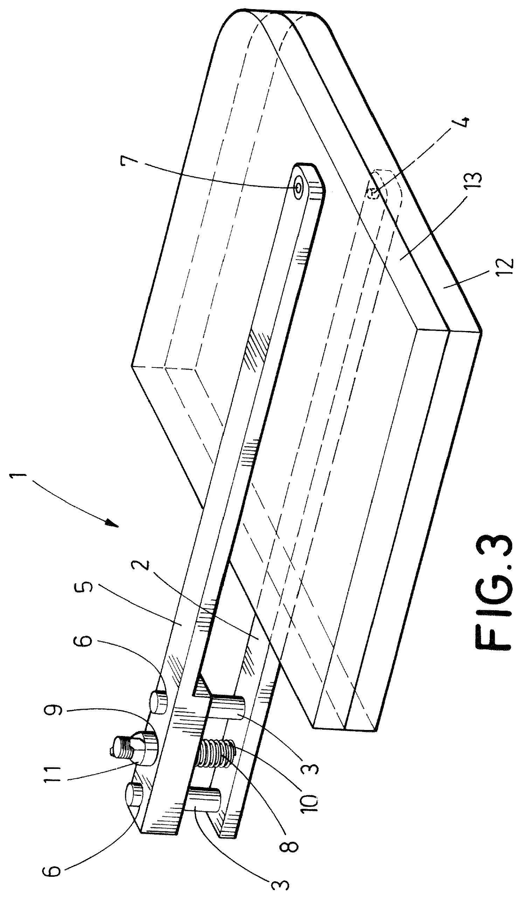

Figures 2 and 3 show the steps of a method for using the drill hole locating tool (1) shown in Figure 1. This tool is used for copying an initial drill hole from a first workpiece (12) to a second workpiece (13). The second plate (5) has been partially concealed in Figure 2 to view the assembly better.

The method of copying comprises the following steps:
First, a first workpiece (12) comprising an initial drill hole and a second workpiece (13) are provided. The initial drill hole is to be copied from the first workpiece (12) to the second workpiece (13).

As seen in Figure 2, the positioning protrusion (4) of the drill hole locating tool (1) is then introduced in the initial drill hole of the first workpiece (12) such that, once introduced, said positioning protrusion (4) fixes the first workpiece (12) with respect to the first plate (2) of the drill hole locating tool (1) which is the plate containing the positioning protrusion (4).

As seen in Figure 3, the next step comprises placing the second workpiece (13) on the first workpiece (12) such that the second workpiece (13) is in contact with the face of the first workpiece (12) that is not in contact with the first plate (2). The second plate (5) is then placed such that the first workpiece (12) and the second workpiece (13) are comprised between the first plate (2) and the second plate (5), and the second workpiece (13) is accessible through the positioning hole (7) of the second plate (5). This second plate (5) is tightened against the second workpiece (13) by means of the separating protrusion (8) and the fixing element (11), in this case by means of screwing the fixing element (11) on the separating protrusion (8), gradually pushing the second plate (5) against the second workpiece (13).

Finally, a drill hole is made in the second workpiece (13) through the positioning hole (7) of the second plate (5).

## Claims

1. A drill hole locating tool (1) comprising:
- a first plate (2) comprising at least one guide protrusion (3) and at least one positioning protrusion (4),
- a second plate (5) comprising a guide hole (6) for each guide protrusion (3) and a positioning hole (7) for each positioning protrusion (4), the at least one guide hole (6) and the at least one positioning hole (7) being arranged such that the orthogonal projections of the centers of the guide holes (6) on the first plate (2) in the position of use substantially coincide with the centers of the corresponding guide protrusions (3) and the orthogonal projection of the center of the positioning hole (7) on the first plate (2) in the position of use substantially coincides with the center of the positioning protrusion (7),
- a separating protrusion (8) arranged in the first plate (2) or in the second plate (5),
- at least one elastic element (10) with two ends, one end being located in contact with one of the first plate (2) and second plate (5),
**characterised in that**
- the drill hole locating tool (1) further comprises a separating through hole (9) made in the plate (2, 5) not having the separating protrusion (8),
- the other end of the at least one elastic element (10) is located in contact with the other plate (2, 5), such that the elastic force generated by the elastic element (10) tends to separate both first plate (2) and second plate (5), and
- the drill hole locating tool (1) further comprises a fixing element (11) suitable for being fixed to the separating protrusion (8) and abutting against the plate (2, 5) having the separating hole (9), balancing the elastic separating force exerted by the elastic element (10) on the second plate (5).

2. The drill hole locating tool (1) according to claim 1, wherein the elastic element (10) surrounds the at least one separating protrusion (8).

3. The drill hole locating tool (1) according to any of the preceding claims, wherein the elastic element (10) is a spring.

4. The drill hole locating tool (1) according to any of the preceding claims, wherein the at least one separating protrusion (8) is threaded.

5. The drill hole locating tool according to the preceding claim, wherein the fixing element (11) is a wing nut suitable for being fixed to the separating element (8) by means of screwing.

6. The drill hole locating tool according to any of the preceding claims, wherein the first plate (2) and the second plate (5) are metal plates.

7. The drill hole locating tool according to any of the preceding claims, wherein the length of at least one guide protrusion (3) is greater than 10 mm.

8. A method for using a drill hole locating tool (1) according to any of the preceding claims for copying an initial drill hole from a first workpiece (12) to a second workpiece (13), the method being **characterized in that** it comprises the steps of:
a) providing a first workpiece (12) comprising an initial drill hole, and a second workpiece (13),
b) introducing the positioning protrusion (4) of the drill hole locating tool (1) in the initial drill hole of the first workpiece (12),
c) placing the second workpiece (13) on the first workpiece (12),
d) tightening the second plate (5) against the second workpiece (13) by means of the separating protrusion (8) and the fixing element (11), such that the first workpiece (12) and the second workpiece (13) are comprised between the first plate (2) and the second plate (5), and the second workpiece (13) is accessible through the positioning hole (7) of the second plate (5),
e) making a drill hole in the second workpiece (13) through the positioning hole (7).

9. The method for using the drill hole locating tool according to the preceding claim, wherein:
the fixing element (11) is a wing nut suitable for being fixed to the separating element (8) by means of screwing, and
in step d) the second plate (5) is tightened against the second workpiece (13) by means of screwing said fixing element (11) on the separating protrusion (8).

## Patentansprüche

1. Bohrlochplatzierungswerkzeug (1) umfassend:
- eine erste Platte (2), welche wenigstens einen Führungsvorsprung (3) und wenigstens einen Positionierungsvorsprung (4) umfasst,
- eine zweite Platte (5), welche ein Führungsloch (6) für jeden Führungsvorsprung (3) und ein Positionierungsloch (7) für jeden Positionierungsvorsprung (4) umfasst, wobei das wenigstens eine Führungsloch (6) und das wenigstens eine Positionierungsloch (7) derart angeordnet sind, dass die orthogonale Projektion der Zentren der Führungslöcher (6) an der ersten Platte (2) in der Gebrauchsstellung im Wesentlichen mit den Zentren der korrespondierenden Führungsvorsprünge (3) zusammenfallen und die orthogonale Projektion des Zentrums des Positionierungslochs (7) an der ersten Platte (2) in der Gebrauchsstellung im Wesentlichen mit dem Zentrum des Positionierungsvorsprungs (7) zusammenfällt,
- ein in der ersten Platte (2) oder in der zweiten Platte (5) angeordneter Trennvorsprung (8),
- wenigstens ein elastisches Element (10) mit zwei Enden, wobei ein Ende in Kontakt mit einem aus der ersten Platte (2) und der zweiten Platte (5) platziert ist,
**dadurch gekennzeichnet, dass**
- das Bohrlochplatzierungswerkzeug (1) ferner ein Trenndurchgangsloch (9) umfasst, welches in der den Trennvorsprung (8) nicht aufweisenden Platte (2, 5) hergestellt ist,
- das andere Ende des wenigstens einen elastischen Elements (10) in Kontakt mit der anderen Platte (2, 5) platziert ist, so dass die durch das elastische Element (10) erzeugte Spannkraft dazu tendiert sowohl die erste Platte (2) als auch die zweite Platte (5) zu trennen, und
- das Bohrlochplatzierungswerkzeug (1) ferner ein Befestigungselement (11) umfasst, welches dazu geeignet ist, an dem Trennvorsprung (8) befestigt zu werden und welches an die das Trennloch (9) aufweisende Platte (2, 5) anschlägt, die durch das elastische Element (10) an der zweiten Platte (5) ausgeübte elastische Trennkraft ausgleichend.

2. Bohrlochplatzierungswerkzeug (1) nach Anspruch 1, wobei das elastische Element (10) den wenigstens einen Trennvorsprung (8) umgibt.

3. Bohrlochplatzierungswerkzeug (1) nach einem der vorhergehenden Ansprüche, wobei das elastische Element (10) eine Feder ist.

4. Bohrlochplatzierungswerkzeug (1) nach einem der vorhergehenden Ansprüche, wobei der wenigstens eine Trennvorsprung (8) mit einem Gewinde versehen ist.

5. Bohrlochplatzierungswerkzeug nach dem vorhergehenden Anspruch, wobei das Befestigungselement (11) eine Flügelmutter ist, welche dazu geeignet ist, an dem Trennelement (8) mittels eines Verschraubens befestigt zu sein.

6. Bohrlochplatzierungswerkzeug nach einem der vorhergehenden Ansprüche, wobei die erste Platte (2) und die zweite Platte (5) Metallplatten sind.

7. Bohrlochplatzierungswerkzeug nach einem der vorhergehenden Ansprüche, wobei die Länge des wenigstens einen Führungsvorsprungs (3) größer als 10 mm ist.

8. Verfahren zur Verwendung eines Bohrlochplatzierungswerkzeugs (1) nach einem der vorhergehenden Ansprüche zum Vervielfältigen eines initialen Bohrlochs von einem ersten Werkstück (12) zu einem zweiten Werkstück (13), wobei das Verfahren **dadurch gekennzeichnet ist, dass** es die Schritte umfasst:
a) Bereitstellen eines ersten Werkstücks (12), welches ein initiales Bohrloch umfasst, und eines zweiten Werkstücks (13),
b) Einbringen des Positionierungsvorsprungs (4) des Bohrlochplatzierungswerkzeugs (1) in das initiale Bohrloch des ersten Werkstücks (12),
c) Platzieren des zweiten Werkstücks (13) an dem ersten Werkstück (12),
d) Festziehen der zweiten Platte (5) gegen das zweite Werkstück (13) mittels des Trennvorsprungs (8) und des Befestigungselements (11), so dass das erste Werkstück (12) und das zweite Werkstück (13) zwischen der ersten Platte (2) und der zweiten Platte (5) enthalten sind, und wobei das zweite Werkstück (13) durch das Positionierungsloch (7) der zweiten Platte (5) zugänglich ist,
e) Herstellung eines Bohrlochs in dem zweiten Werkstück (13) durch das Positionierungsloch (7).

9. Verfahren zur Benutzung des Bohrlochplatzierungswerkzeugs nach dem vorhergehenden Anspruch, wobei:
das Befestigungselement (11) eine Flügelmutter ist, welche dazu geeignet ist, an dem Trennelement (8) mittels eines Verschraubens befestigt zu werden, und in Schritt d)
die zweite Platte (5) gegen das zweite Werkstück (13) mittels eines Verschraubens des Befestigungselements (11) an dem Trennvorsprung (8) festgezogen wird.

## Revendications

1. Outil de localisation de trou de perçage (1) comprenant :
- une première plaque (2) comprenant au moins une saillie de guidage (3) et au moins une saillie de positionnement (4),
- une seconde plaque (5) comprenant un trou de guidage (6) pour chaque saillie de guidage (3) et un trou de positionnement (7) pour chaque saillie de positionnement (4), le au moins un trou de guidage (6) et le au moins un trou de positionnement (7) étant agencés de sorte que les projections orthogonales des centres des trous de guidage (6) sur la première plaque (2) dans la position d'utilisation coïncident sensiblement avec les centres des saillies de guidage (3) correspondantes, et la projection orthogonale du centre du trou de positionnement (7) sur la première plaque (2) dans la position d'utilisation coïncide sensiblement avec le centre de la saillie de positionnement (7),
- une saillie de séparation (8) agencée dans la première plaque (2) ou dans la seconde plaque (5),
- au moins un élément élastique (10) avec deux extrémités, une extrémité étant positionnée en contact avec l'une parmi la première plaque (2) et la seconde plaque (5),
**caractérisé en ce que**
- l'outil de localisation de trou de perçage (1) comprend en outre un trou débouchant de séparation (9) pratiqué dans la plaque (2, 5) n'ayant pas la saillie de séparation (8),
- l'autre extrémité du au moins un élément élastique (10) est positionnée en contact avec l'autre plaque (2, 5), de sorte que la force élastique générée par l'élément élastique (10) a tendance à séparer à la fois la première plaque (2) et la seconde plaque (5), et
- l'outil de localisation de trou de perçage (1) comprend en outre un élément de fixation (11) approprié pour être fixé sur la saillie de séparation (8) et venir en butée contre la plaque (2, 5) ayant le trou de séparation (9), équilibrant la force de séparation élastique exercée par l'élément élastique (10) sur la seconde plaque (5).

2. Outil de localisation de trou de perçage (1) selon la revendication 1, dans lequel l'élément élastique (10) entoure la au moins une saillie de séparation (8).

3. Outil de localisation de trou de perçage (1) selon l'une quelconque des revendications précédentes, dans lequel l'élément élastique (10) est un ressort.

4. Outil de localisation de trou de perçage (1) selon l'une quelconque des revendications précédentes, dans lequel la au moins une saillie de séparation (8) est filetée.

5. Outil de localisation de trou de perçage selon la revendication précédente, dans lequel l'élément de fixation (11) est un écrou à oreilles approprié pour être fixé sur l'élément de séparation (8) au moyen du vissage.

6. Outil de localisation de trou de perçage selon l'une quelconque des revendications précédentes, dans lequel la première plaque (2) et la seconde plaque (5) sont des plaques métalliques.

7. Outil de localisation de trou de perçage selon l'une quelconque des revendications précédentes, dans lequel la longueur d'au moins une saillie de guidage (3) est supérieure à 10 mm.

8. Procédé pour utiliser un outil de localisation de trou de perçage (1) selon l'une quelconque des revendications précédentes, pour reproduire un trou de perçage initial d'une première pièce (12) sur une seconde pièce (13), le procédé étant **caractérisé en ce qu'**il comprend les étapes consistant à :
a) prévoir une première pièce (12) comprenant un trou de perçage initial, et une seconde pièce (13),
b) introduire la saillie de positionnement (4) de l'outil de localisation de trou de perçage (1) dans le trou de perçage initial de la première pièce (12),
c) placer la seconde pièce (13) sur la première pièce (12),
d) serrer la seconde plaque (5) contre la seconde pièce (13) au moyen de la saillie de séparation (8) et de l'élément de fixation (11), de sorte que la première pièce (12) et la seconde pièce (13) sont comprises entre la première plaque (2) et la seconde plaque (5), et la seconde pièce (13) est accessible par le trou de positionnement (7) de la seconde plaque (5),
e) réaliser un trou de perçage dans la seconde pièce (13) à travers le trou de positionnement (7).

9. Procédé pour utiliser l'outil de localisation de trou de perçage selon la revendication précédente, dans lequel :
l'élément de fixation (11) est un écrou à oreilles approprié pour être fixé sur l'élément de séparation (8) au moyen du vissage, et à l'étape d), la seconde plaque (5) est serrée contre la seconde pièce (13) au moyen du vissage dudit élément de fixation (11) sur la saillie de séparation (8).
